# EUROPÄISCHE PATENTSCHRIFT

(11) **EP 2 667 495 B1**
(45) Veröffentlichungstag und Bekanntmachung des Hinweises auf die Patenterteilung: **30.06.2021**
(21) Anmeldenummer: 13167214.9
(22) Anmeldetag: 10.05.2013
(51) Int. Cl.: H02K 19/10, H02K 7/14, B66F 9/22

(54) **Flurförderzeug mit elektrischem Pumpenmotor**
Industrial truck with electric pump motor
Chariot de manutention doté d'un moteur de pompe électrique

(30) Priorität: 21.05.2012 DE 102012104343
(43) Veröffentlichungstag der Anmeldung: 27.11.2013
(73) Patentinhaber: Linde Material Handling GmbH, 63743 Aschaffenburg (DE)
(72) Erfinder: Weiner, Christian, 63785 Obernburg (DE); Sippel, Heiko, 63741 Aschaffenburg (DE); Marner, Wilfried, 63741 Nilkheim (DE)
(74) Vertreter: Patentship Patentanwaltsgesellschaft mbH

(56) Entgegenhaltungen:
- EP-A2- 1 626 478
- EP-B1- 0 996 583
- JP-A- H11 146 615
- JP-A- 2006 121 821
- US-A- 3 597 646
- US-A- 4 074 160

## Beschreibung

Die Erfindung betrifft ein Flurförderzeug mit einer Arbeitshydraulik, die durch eine Hydraulikpumpe mit Druckmittel versorgt wird, wobei die Hydraulikpumpe von einem elektrischen Pumpenmotor angetrieben wird.

Bei Flurförderzeugen kommen Arbeitshydrauliken zum Einsatz, bei denen insbesondere Lasthandhabungsvorrichtungen durch hydraulischen Druck angetrieben werden. Die Arbeitshydraulik wird dabei durch eine Hydraulikpumpe mit Druckmittel versorgt, die insbesondere bei batterie-elektrisch angetrieben Flurförderzeugen durch einen Elektromotor angetrieben wird. Ein Beispiel für eine solche Arbeitshydraulik ist das Hubgerüst eines als Gabelstapler ausgeführten Flurförderzeugs, bei dem die Hubbewegung eines anhebaren und absenkbaren Lastaufnahmemittels durch Hydraulikzylinder als Hubantrieb bewirkt wird. Neben einem Hubantrieb können Verbraucher der Arbeitshydraulik von einem Neigeantrieb zum Vor- und Zurückneigen des Hubgerüstes und/oder einem Zusatzantrieb gebildet werden, beispielsweise einer Seitenschiebereinrichtung des Lastaufnahmemittels zum seitlichen Verschieben des Lastaufnahmemittels.

Da sehr häufig eine Lenkung des Flurförderzeugs ebenfalls eine Lenkungshydraulik aufweist, die von derselben Hydraulikpumpe mit Druckmittel versorgt wird, wird im Folgenden zur Arbeitshydraulik auch eine solche, durch Hydraulikdruck betätigte oder unterstützte hydraulische Lenkung des Flurförderzeugs gerechnet.

In dem Stand der Technik sind sogenannte synchrone Reluktanzmaschinen bekannt, die eine dreiphasige Drehfeldmaschine für den 4-Quadranten Betrieb darstellen, wobei diese als Motor oder Generator sowie jeweils in beiden Drehrichtungen ausgeführt und betrieben werden können.

Bei diesen synchronen Reluktanzmaschinen sind die Ständerwicklungen im Beispielsfall eines dreiphasigen Motors, vergleichbar einem Asynchronmotor, jeweils um 120° elektrisch versetzt angeordnete Phasenwicklungen jeweils für eine der drei Phasen.

Durch eine spezielle Formgebung des Läufers oder Rotors mit ausgeprägten Polen wird diesem eine starke bevorzugte Ausrichtung zum magnetischen Feld eingeprägt. Die Drehbewegung wird durch ein rotierendes magnetisches Feld erzeugt, dem der Rotor zu folgen versucht. Im Gegensatz zu Asynchronmaschinen oder durch Permanentmagnete erregten Synchronmaschinen, bei denen das Drehmoment durch die Wechselwirkung eines Magnetfelds mit einem durch einen Leiter fließenden Strom bzw. die Wechselwirkung mit den Permanentmagneten erzeugt wird, erfolgt die Drehmomenterzeugung in einer Reluktanzmaschine aufgrund der auf einen weichmagnetischen Stoff eines Rotors in einem Magnetfeld wirkenden Maxwellschen Kraft durch die das magnetische System den Zustand des geringsten magnetischen Widerstands oder Reluktanz anstrebt. Die Bewegung kommt durch das Ausrichten des Rotors an einem durch die Ständerspulen bzw. Statorwicklungen erzeugten Magnetfeld zustande, wobei durch einen geeigneten dreiphasigen Umrichter und die induktive Kopplung der Ständerspulen ein sich drehendes Magnetfeld erzeugt wird. Hierzu muss der Rotor eine bevorzugte Ausrichtung innerhalb des Magnetfelds und somit Pole aufweisen.

Dabei unterscheidet sich eine so genannte synchrone Reluktanzmaschine grundlegend im Aufbau als auch in der Ansteuerung von einer sogenannten geschalteten Reluktanzmaschine oder "Switched Reluctance Machine". Bei gleichem zugrunde liegendem physikalischen Prinzip der Erzeugung einer Drehbewegung aufgrund der Ausrichtung des Rotors an dem durch die Ständerspulen erzeugten und sich drehenden Magnetfeld sind die Ständerwicklung der synchronen Reluktanzmaschine, ähnlich dem Asynchronmotor, als 120° versetzte, Dreiphasenwicklungen ausgeführt, während die Ständerwicklung einer n-phasigen geschalteten Reluktanzmaschine jeweils n-Ständerzähne bzw. Ständerpole oder eine der Polpaarzahl proportionales Vielfaches umspannt. Die Ständerwicklungen sind demnach um 180°/n elektrisch versetzt. Auch sind die Pole des Rotors einer geschalteten Reluktanzmaschine wesentlich stärker ausgeprägt als bei der synchronen Reluktanzmaschine. Nachteilig ist, dass dies bei einer geschalteten Reluktanzmaschine zu einer hohen Drehmomentwelligkeit und somit Geräuschentwicklung führt.

Bei batterie-elektrisch betriebenen Flurförderzeugen werden als elektrischer Pumpenmotor der Arbeitshydraulik einfach aufgebaute Gleichstrommaschinen eingesetzt, wenn besonders niedrige Kosten angestrebt werden.

Nachteilig an diesem Stand der Technik ist jedoch, dass Gleichstrommaschinen einen geringeren Wirkungsgrad als vergleichbare Wechselstrom-Maschinen haben. Darüber hinaus sind sie, aufgrund der hohen Anzahl an Einzelkomponenten, im Aufbau wesentlich komplexer als z.B. Asynchronmaschinen. Außerdem muss der Strom dem Anker über Schleifkontakte an dem Kommutator zugeführt werden. Diese Schleifkontakte sind als Bürsten oder Kohlebürsten ausgeführt und verschleißbehaftet, wodurch ein Wartungsaufwand entsteht.

Anstatt Gleichstrommaschinen werden als elektrischer Pumpenmotor der Arbeitshydraulik dreiphasige Asynchronmaschinen genutzt, oder bei noch größeren Leistungsanforderungen auch dreiphasige Permanentmagnetsynchronmotoren, wenn höhere Anforderungen als an Gleichstrommaschinen bestehen. Im Gegensatz zu den Gleichstrommaschinen sind Dreiphasensynchronmotoren oder Dreiphasenasynchronmotoren im Aufbau einfacher und wartungsfrei, wegen des entfallenen Kommutators, und zeichnen sie sich durch einen höheren Wirkungsgrad aus. Insbesondere bei Arbeitshydrauliken mit Dreiphasensynchronmotoren oder Dreiphasenasynchronmotoren als elektrischer Pumpenmotor ist zumeist in die Arbeitshydraulik eine Lenkhydraulik integriert.

Nachteilig ist jedoch, dass die Ansteuerung, im Gegensatz zur Gleichstrommaschine, wegen des benötigten, gesteuerten dreiphasigen Drehfeldes wesentlich komplexer ist, denn es wird die Erfassung der Lage oder Drehgeschwindigkeit sowie eine entsprechende Leistungselektronik benötigt.

Die EP 0 996 583 B1 offenbart eine integrierte Steuerung für elektrische Hubwagen.

Die US 4 074 160 A offenbart rotierende elektrische Maschinen.

Die US 3 597 646 A offenbart eine dynamoelektrische Maschine in Form eines Reluktanzmotors.

Die JP H11 146615 A offenbart einen mehrphasigen Reluktanzmotor.

Die EP 1 626 478 A2 offenbart einen nassen Rotorzirkulator.

Der vorliegenden Erfindung liegt die Aufgabe zugrunde, ein Flurförderzeug mit einer Arbeitshydraulik, die durch eine mittels eines elektrischen Pumpenmotor angetrieben Hydraulikpumpe mit Druckmittel versorgt wird, zur Verfügung zu stellen, das kostengünstig herzustellen ist und zuverlässig und robust arbeitet, um rauen Betriebsbedingungen gewachsen zu sein.

Diese Aufgabe wird durch ein Flurförderzeug mit den Merkmalen des Patentanspruchs 1 gelöst. Vorteilhafte Weiterbildungen der Erfindung werden in den Unteransprüchen angegeben.

Die Aufgabe wird erfindungsgemäß dadurch gelöst, dass bei einem Flurförderzeug mit einer Arbeitshydraulik, die durch eine Hydraulikpumpe mit Druckmittel versorgt wird, wobei die Hydraulikpumpe von einem elektrischen Pumpenmotor angetrieben wird, der elektrische Pumpenmotor einen Stator mit mindestens drei Phasenwicklungen zur Erzeugung eines Drehfeldes und einen Rotor mit weichmagnetischem Material hoher Permeabilität aufweist, wobei der Rotor Pole mit in Orientierung der Pole geringer magnetischer Reluktanz aufweist, wobei der elektrische Pumpenmotor als synchrone Reluktanzmaschine ausgeführt ist.

Durch eine geeignete Leistungselektronik, beispielsweise einen Umrichter mit Halbleiterbausteinen, werden die Phasenwicklungen des Stators mit sinusförmigen Strömen so erregt, dass sich ein Drehfeld mit im Wesentlichen kontinuierlicher magnetischer Feldstärke bildet, deren Orientierung in Drehrichtung umläuft. Vorteilhaft ergibt sich durch ein Flurförderzeug, das mit einem solchen als synchrone Reluktanzmaschine wirkenden Elektromotor als elektrischem Pumpenmotor ausgestattet ist, eine kostengünstige und sehr robuste Druckmittelversorgung für die Arbeitshydraulik, die mit großer Zuverlässigkeit und geringer Ausfallwahrscheinlichkeit arbeitet. Es ergibt sich ein geringer Materialeinsatz, da keine Magneten oder Kupfer- bzw. Aluminiumleiter auf dem Rotor benötigt werden, verbunden mit entsprechenden Kosteneinsparungen, wenn diese teureren Materialen nicht erforderlich sind.

Weitere Vorteile des erfindungsgemäßen Flurförderzeugs mit Pumpenmotor bestehen darin, dass keine Permanentmagnete erforderlich sind, deren Preise aufgrund eingesetzter seltener Materialien stark schwanken und sehr hoch sein kann. Der Pumpenmotor weist auch vorteilhaft einen guten Wirkungsgrad durch Wegfall der Ohmschen Verluste im Rotor auf und ist wartungsfrei, da bürstenlos. Durch den einfachen Aufbau ergibt sich auch eine große Montagefreundlichkeit bzw. gute Automatisierbarkeit der Fertigung. Bei einer Ausführung des Stators als Blechpaket mit verteilter Wicklung und/oder des Rotors als Blechpaket kann auch die Leistungsfähigkeit gut an den Bedarf angepasst werden über das Ändern der Länge des Blechpakets. Wegen des geringen Einflusses der magnetischen Sättigung im Überlastbereich kann der Pumpenmotor auch überlastet werden. Es erweist sich auch als vorteilhaft, dass der Pumpenmotor gegenüber thermischen Belastungen sich nicht kritisch verhält, da kein Permanentmagnetmaterial vorhanden ist, das aufgrund von zu starker Erwärmung seine Magnetisierung verlieren könnte, und dass eine einfache Kühlung möglich ist, da Verlustleistung überwiegend auf dem Stator in dessen Phasenwicklungen entsteht. Ebenso ist eine Kühlung der Lagerung des Rotors einfacher zu bewerkstelligen und es erfolgt von vorneherein aus dem Rotor selbst nur eine geringere Erwärmung der Lagerung. Obwohl vorteilhafter Weise eine Rückspeisung von Energie durch Generatorbetrieb grundsätzlich möglich ist, erfolgt eine solche jedoch nicht im Fehlerfall. Der Pumpenmotor des erfindungsgemäßen Flurförderzeugs kann in Stern- oder Dreiecksschaltung und unter Einsatz bestehender, kostengünstig zur Verfügung stehender Leistungselektronik, wie etwa eines Dreiphasenwechselrichters mit zugehöriger Sensorik, betrieben werden, wobei eine Strom-, Spannungs- oder Flussregelung mit Optimierung auf maximales Drehmoment oder maximale Leistung möglich ist. Dabei ist auch eine sensorlose Regelung möglich. Vorteilhaft kommt es schließlich zu keiner Bewegung des Pumpenmotors im Kurzschlussfall und somit zu unerwünschten Reaktionen der Arbeitshydraulik kommen, wodurch eine hohe Betriebssicherheit des Flurförderzeugs erzielt wird.

Zur Erzeugung des Drehfeldes des Stators kann ein Umrichter vorgesehen sein, der die Phasenwicklungen sinusförmig erregt.

Vorteilhaft weist der der Rotor vier radial nach außen gerichtete Pole auf.

Die vier Pole können in zwei sich unter 90° schneidenden Achsen angeordnet sein.

Der Rotor kann Segmente an seinem Umfang aufweisen, die in Umfangsrichtung jeweils mit einem Luftspalt zueinander beanstandet sind. Hierdurch können auf einfache Weise die entsprechenden Pole gebildet werden.

In günstiger Ausführungsform der Erfindung weist der Rotor axial laminierte Bleche auf, deren offene, radiale Schnittkanten die Pole bilden.

Dadurch lässt sich auf kostengünstige Art und Weise ein Rotor eines erfindungsgemäßen Pumpenmotors bilden, der insbesondere gut an unterschiedliche Leistungsanforderungen angepasst werden kann, etwa durch eine unterschiedliche axiale Länge des Rotors, aber auch durch eine angepasste Anzahl von Blechen, die übereinander laminiert sind.

Der Rotor kann Flusssperren-Schnitte aufweisen.

Eine alternative Möglichkeit, den Rotor herzustellen, besteht darin, durch nach dem Stand der Technik bekannte Methoden erzeugte Ausnehmungen Sperren für den magnetischen Fluss zu bilden, um die Pole am Rotor herzustellen.

In einer Weiterbildung der Erfindung kann der Rotor zusätzliche Eisenstäbe und/oder Aluminiumstäbe aufweisen.

Der Rotor kann zusätzliche Wicklungen aus Eisen- und/oder Aluminiumdraht aufweisen.

In einer Ausführungsform der Erfindung weist der Rotor zusätzliche Permanentmagnete auf.

In einer Ausgestaltung der Erfindung ist der Rotor des Pumpenmotors zugleich ein Förderrad der Hydraulikumpe.

Dadurch wird ein besonders kompakter Aufbau einer Einheit aus elektrischem Pumpenmotor und Hydraulikpumpe ermöglicht, da bei der Gestaltung eines Förderrades der Hydraulikpumpe es lediglich möglich sein muss, Pole der magnetischen Reluktanz zu bilden.

Vorteilhaft umfasst die Arbeitshydraulik eine Hubvorrichtung für Lasten, insbesondere ein Hubgerüst mit höhenbeweglich geführtem Lastaufnahmemittel, und/oder eine hydraulische Lenkung.

Die Hydraulikpumpe und der elektrische Pumpenmotor können in ein Kompaktaggregat integriert werden, das die Druckversorgung für die Arbeitshydraulik, insbesondere für eine Hubvorrichtung und/oder eine hydraulische Lenkung übernimmt. Eine elektronische Steuereinheit und/oder eine Leistungselektronik können ebenfalls in das Kompaktaggregat integriert werden. Daneben können alternativ, aber auch zusätzlich, in das Kompaktaggregat hydraulische Ventile integriert werden.

Weitere Vorteile und Einzelheiten der Erfindung werden anhand des in den schematischen Figuren dargestellten Ausführungsbeispiels näher erläutert. Hierbei zeigen
- Fig. 1a: schematisch ein Ausführungsbeispiel eines Rotors eines Pumpenmotors im Querschnitt, der bei dem erfindungsgemäßen Flurförderzeug zum Einsatz kommen,
- Fig. 1b: schematisch ein weiteres Ausführungsbeispiel eines Rotors des Pumpenmotors im Querschnitt, der bei dem erfindungsgemäßen Flurförderzeug zum Einsatz kommt,
- Fig. 1c: schematisch ein drittes Ausführungsbeispiel eines Rotors des Pumpenmotors im Querschnitt, der bei dem erfindungsgemäßen Flurförderzeug zum Einsatz kommt,
- Fig. 2: schematisch ein Schaltbild eines nach dem Stand der Technik bekannten Dreiphasenumrichters,
- Fig. 3: schematisch eine Anordnung der Statorwicklungen einer im Stand der Technik bekannten geschaltete Reluktanzmaschine,
- Fig. 4: schematisch ein Schaltbild einer im Stand der Technik bekannten Ansteuerung der geschalteten Reluktanzmaschine der Fig. 3,
- Fig. 5: schematisch, entsprechend dem Stand der Technik, die Beschaltung der Wicklungen der geschalteten Reluktanzmaschine der Fig. 3,
- Fig. 6: ein Ausführungsbeispiel eines erfindungsgemäßen Flurförderzeugs und
- Fig. 7: schematisch eine elektrische Pumpeneinheit des erfindungsgemäßen Flurförderzeugs der Fig. 6.

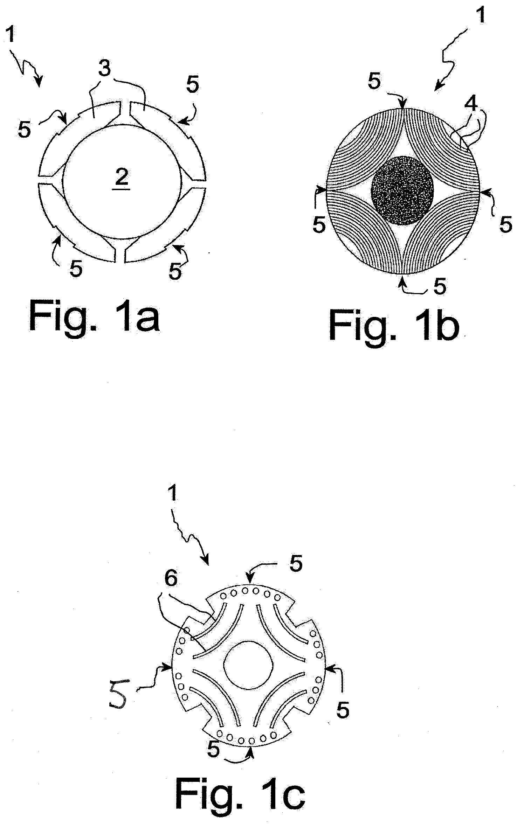

Die Fig. 1a zeigt schematisch ein Ausführungsbeispiel eines Rotors 1 eines elektrischen Pumpenmotors einer Arbeitshydraulik, der bei einem erfindungsgemäßen Flurförderzeug zum Einsatz kommt. Der Rotor 1 besteht aus einer Rotorwelle 2 sowie vier Segmenten 3 aus weichmagnetischem oder einem geeigneten hochpermeablen Material, die am Umfang angeordnet und jeweils unter Ausbildung eines Luftspalts untereinander beanstandet sind. Die Segmente 3 bilden in Umfangsrichtung betrachtet in ihrem jeweils mittleren Bereich Pole 5, die beim Anliegen eines äußeren Magnetfelds sich mit dem Magnetfeld auszurichten suchen, da in der Orientierung der Pole 5 die kleinste magnetische Reluktanz vorliegt. Wird durch Statorwicklungen ein äußeres Drehfeld erzeugt, so wird der Rotor 1 von dem Magnetfeld mitgenommen. Die vier Pole 5 sind in zwei sich rechtwinklig schneidenden Achsen angeordnet.

Die Fig. 1b zeigt schematisch ein weiteres Ausführungsbeispiel eines Rotors 1 eines elektrischen Pumpenmotors im Querschnitt, der bei dem erfindungsgemäßen Flurförderzeug zum Einsatz kommt. Einander entsprechende Bauteile sind wie auch in den folgenden Zeichnungen mit gleichen Bezugsziffern versehen. Der Rotor 1 besteht hier aus mehreren übereinandergelegten und aneinander befestigten, beispielsweise verklebten, Blechen 4. Durch dieses "Laminieren" der Bleche 4 wird eine bevorzugte Ausrichtung der entstehenden Blechpakete mit dem Magnetfeld in der Ebene der Bleche 4 erreicht. Werden die Bleche, wie in Fig. 1b dargestellt, in vier Viertelkreisen angeordnet, so bilden sich vier Pole 5 an den Stellen, an denen die laminierten Bleche 4 den Außenradius des Rotors 1 schneiden.

Die Fig.1c zeigt schematisch ein drittes Ausführungsbeispiel eines Rotors 1 eines Pumpenmotors im Querschnitt, der bei dem erfindungsgemäßen Flurförderzeug zum Einsatz kommt. Bei diesem Ausführungsbeispiel weist der Rotor 1 im Querschnitt betrachtet Flusssperren-Schnitte 6 auf, die durch nach dem Stand der Technik bekannte Methoden erzeugt werden, beispielsweise sofern der Rotor 1 aus axial hintereinander angeordneten Blechen aufgebaut ist, durch Ausstanzen. Diese Flusssperren-Schnitte 6 bilden Barrieren für den magnetischen Fluss und führen dazu, dass sich wiederum Pole 5 bilden.

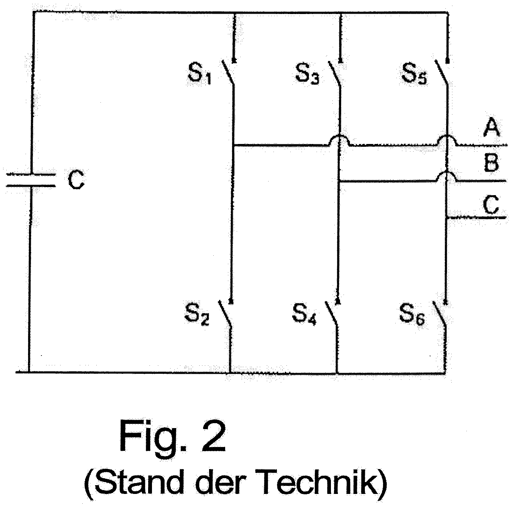

Die Fig. 2 zeigt schematisch ein Schaltbild eines nach dem Stand der Technik bekannten Dreiphasenumrichters. Ein erstes elektronisches Schaltventil S1 bildet mit einem zweiten elektronischen Schaltventil S2, die als Leistungsbauelemente, beispielsweise Leistungstransistoren ausgebildet sind, eine Schaltbrücke für eine erste Phase A. Weitere elektronische Schaltventile S3 und S4 bilden eine Schaltbrücke für eine zweite Phase B und elektronische Schaltventile S5 und S6 bilden eine Schaltbrücke für eine dritte Phase C. Durch geeignete Modulationsverfahren, wie etwa eine Pulsweitenmodulation, kann durch einen solchen Dreiphasenumrichter aus Gleichstrom ein Drehstrom mit jeweils sinusförmigen Phasen erzeugt werden, der in Sternschaltung oder Dreieckschaltung bei beispielsweise um 120° elektrisch wirksam zueinander angeordneten Statorspulen des erfindungsgemäßen Pumpenmotors ein magnetisches Drehfeld erzeugen kann.

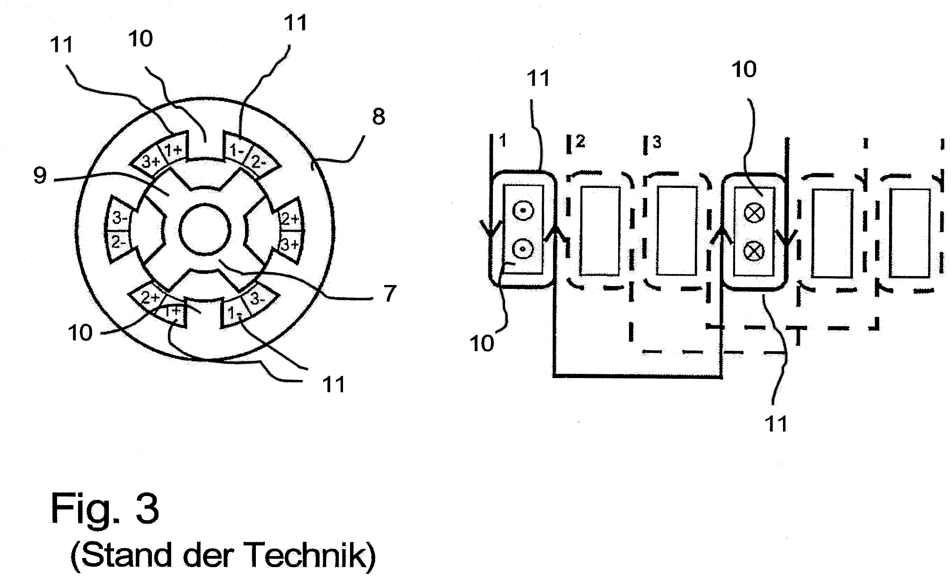

Die Fig. 3 stellt schematisch eine Anordnung der Statorwicklungen einer im Stand der Technik bekannten geschalteten Reluktanzmaschine dar. Dargestellt ist eine typische Geometrie und Wicklungsanordnung einer dreiphasigen 6/4 geschalteten Reluktanzmaschine. Ein Rotor 7 läuft innerhalb eines Stators 8, wobei der Rotor 7 insgesamt vier Polschuhe 9 aufweist und der Stator 8 insgesamt sechs Polschuhe 10. Je gegenüberliegende Polschuhe 10 des Stators 8 sind von einer gemeinsamen Wicklung 11 so umfasst das diese bei fließendem Strom entgegengesetzte magnetische Pole bilden. Dabei kann die größere Anzahl von sechs Polen 10 des Stators 8 nacheinander mit Strom beschaltet werden, wie sich aus der schematischen Darstellung rechts in Fig. 3 ergibt.

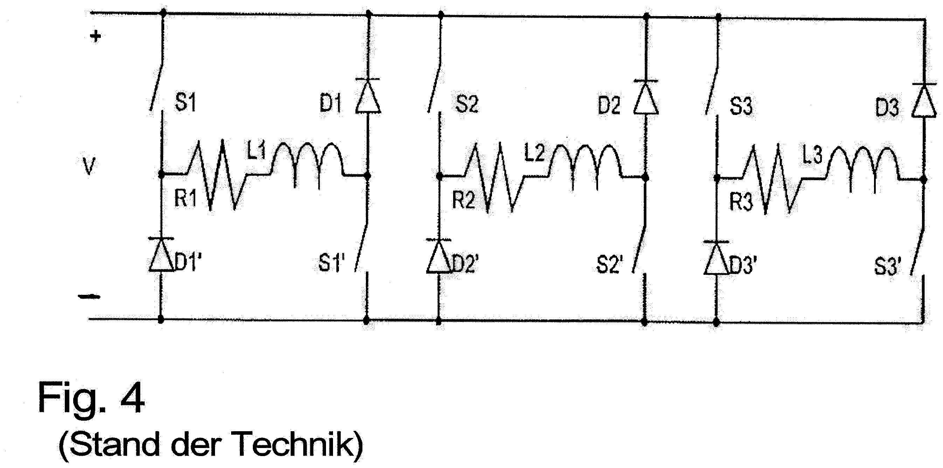

In der Fig. 4 ist schematisch ein Schaltbild einer im Stand der Technik bekannten Ansteuerung der geschalteten Reluktanzmaschine der Fig. 3 dargestellt, wobei die Wicklungen 11 durch die Ersatzschaltbilder der ohmsche Widerstände R2, R2, R3 sowie die Induktivitäten L1, L2 und L3 dargestellt sind.

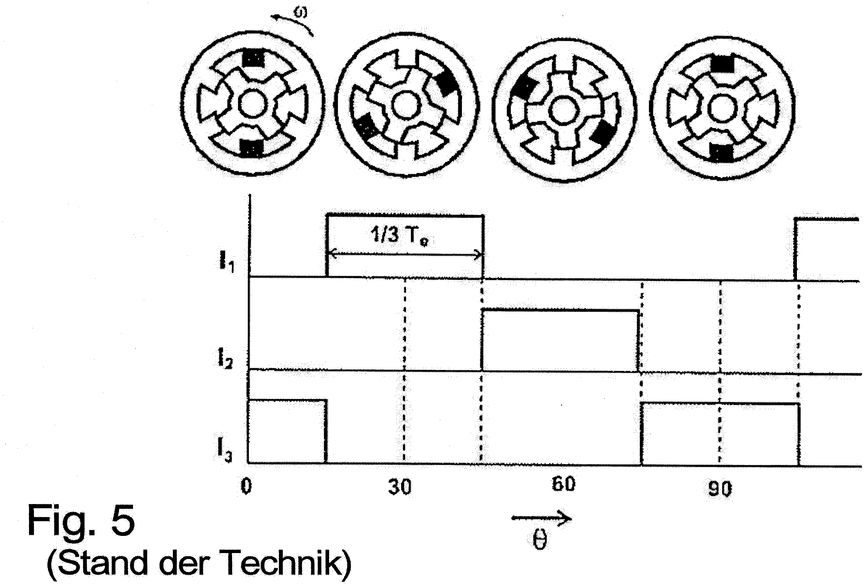

Die Fig. 5 zeigt schematisch, entsprechend dem Stand der Technik, die Beschaltung der Wicklungen der geschalteten Reluktanzmaschine der Fig. 3. Dargestellt sind die Stromwerte I1, I2 und I3 für die drei Wicklungen 11, mit denen die insgesamt sechs Polschuhe 10 des Stators 8 umschlossen sind. Im Gegensatz zur sinusförmigen Erregung einer synchronen Reluktanzmaschine werden unipolare Rechteckströme erzeugt. Diese Ströme werden über die in Fig.4 dargestellte Ansteuerung durch einen Halbbrücken-Umrichter eingeprägt.

Nachteilig ist, dass es bei einer geschalteten Reluktanzmaschine zu einer hohen Drehmomentwelligkeit und somit Geräuschentwicklung kommt.

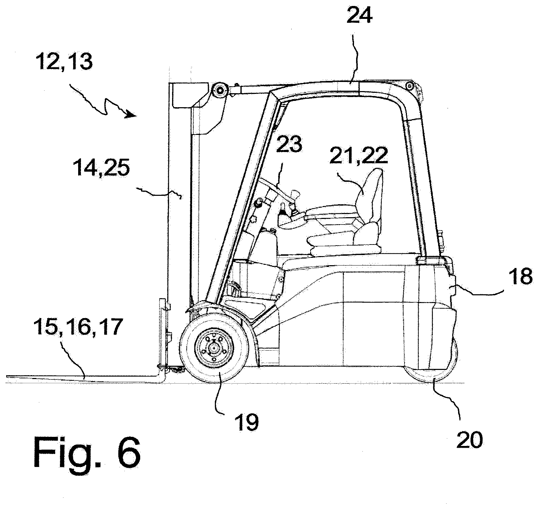

Die Fig. 6 zeigt ein Ausführungsbeispiel eines erfindungsgemäßen Flurförderzeugs 12 in Seitenansicht. Das dargestellte Flurförderzeug ist beispielsweise als elektrisch über eine nicht dargestellte Traktionsbatterie betriebener Gegengewichtsgabelstapler 13 ausgebildet.

Der Gegengewichtsgabelstapler 12 weist frontseitig eine als Hubgerüst 25 ausgebildete vordere Hubvorrichtung 14 mit einem an dieser höhenbeweglich geführten Lastaufnahmemittel 15 auf, beispielsweise einer aus zwei Gabelzinken 16 bestehenden Lastgabel 17. Ein auf dem Lastaufnahmemittel 15 aufliegendes Lastgewicht wird durch ein heckseitiges hinteres Gegengewicht 18 ausgeglichen. Dabei erfolgt eine Hubbewegung des Hubgerüstes 25 durch einen in der Fig. 6 nicht dargestellten Hydraulikzylinder als Hubantrieb, der Teil einer Arbeitshydraulik ist und durch eine Hydraulikpumpe mit Druckmittel versorgt wird. Alternativ ist es auch möglich, dass die Hubbewegung durch mehrere Hydraulikzylinder oder Teleskopzylinder erfolgt. Weitere Verbraucher der Arbeitshydraulik können von einem einen oder mehrere Neigezylinder umfassenden Neigeantrieb des Hubgerüstes 25 und einem oder mehrerer gegebenenfalls vorhandenen Zusatzantrieben gebildet werden, beispielsweise einer Seitenschiebereinrichtung des Lastaufnahmemittels 15.

Der in dem vorliegenden Beispiel beispielsweise batterie-elektrisch angetriebene Gegengewichtsgabelstapler 13 weist eine Vorderachse mit zwei Vorderrädern 19 auf, die bevorzugt als Antriebsräder ausgebildet sind. Zum Antrieb der beiden Antriebsräder kann ein Einzelradantrieb mit einem elektrischen Antriebsmotor für jedes Antriebsrad oder ein beide Räder über ein Differentialgetriebe antreibener einzelner elektrischer Antriebsmotor vorgesehen werden. Das im dargestellten Ausführungsbeispiel als Dreiradstapler ausgebildete Flurförderzeug 12 wird über ein einzelnes gelenktes Rad 20 im Fahrzeugheck gesteuert. Dabei kann der Radeinschlag durch einen in der Fig. 6 nicht dargestellten Hydraulikzylinder bewirkt werden, der als Lenkhydraulik Teil der Arbeitshydraulik ist. In der hier als Beispiel gezeigten Alternative, in der die Vorderrädern 19 als angetriebene Räder ausgebildet sind, ist das gelenkte Rad 20 als nicht angetriebenes Rad ausgeführt. Der Gegengewichtsgabelstapler 13 kann alternativ mit einem verbrennungsmotorischen Antriebssystem versehen sein und/oder als Vierradstapler, bei dem zur Lenkung eine heckseitige Lenkachse mit zwei gelenkten Rädern vorgesehen ist.

Ein Fahrerplatz 21 des Flurförderzeugs 12 ist mit einem Fahrersitz 22 versehen. Der Fahrersitz 22 und weitere Bedienelemente, beispielsweise ein Lenkrad 23, befinden sich unter einem Fahrerschutzdach 24.

Unterhalb des Fahrersitzes 22 befindet sich bei dem batterie-elektrisch angetriebenen Gegengewichtsgabelstapler 13 eine Traktionsbatterie und wäre bei einem verbrennungsmotorisch angetriebenen Gegengewichtsgabelstapler ein Verbrennungsmotor angeordnet.

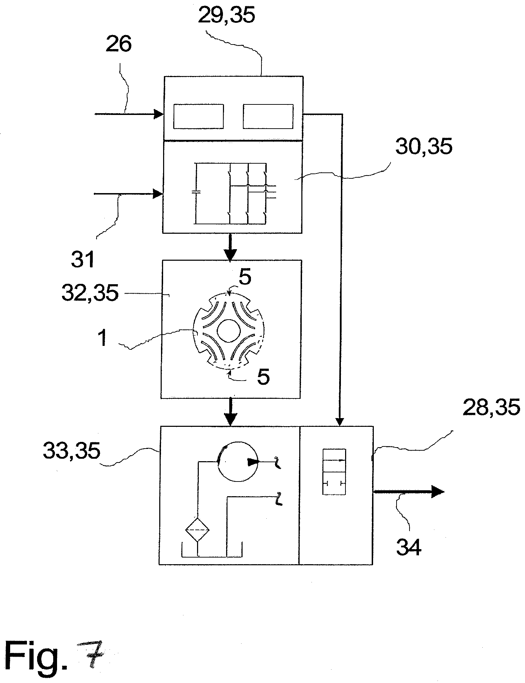

Die Fig. 7 zeigt schematisch eine Pumpeneinheit der Arbeitshydraulik des erfindungsgemäßen Flurförderzeugs 12 der Fig. 6 mit einem erfindungsgemäßen elektrischen Pumpenmotor 32 der Figuren 1a bis 1c.

Eine Steuersignalleitung 26 leitet Steuerbefehle für eine Hydraulikpumpe 33 und ein3 Hydraulikventilanordnung 28, mit der die Verbraucher der Arbeitshydraulik gesteuert werden können, an eine Steuerelektronik 29, die die Hydraulikventilanordnung 28 sowie einen Dreiphasen-Umrichter 30 gemäß der Figur 2, der von einer Stromversorgung 31 mit Strom versorgt wird, ansteuert. Der Dreiphasen-Umrichter 30 steuert Statorwicklungen des elektrischen Pumpenmotors 32 mit dem Rotor 1 an und erzeugt in den Statorwicklung in ein Drehfeld mit im wesentlichen konstantem und sich drehenden magnetischen Fluss, in dem sich der Rotor 1 mit seinen Polen 5 auszurichten sucht und daher mitgedreht wird. Mit dem Rotor 1 des elektrischen Pumpenmotors 32 ist eine Hydraulikpumpe 33 verbunden, die über die Hydraulikventilanordnung 28 Druckmittel in eine Förderleitung 34 fördert.

Die Steuerelektronik 29, der Dreiphasen-Umrichter 30, der elektrische Pumpenmotor 32, die Hydraulikpumpe 33 und die Hydraulikventilanordnung 28 können in verteilten Baugruppen in unterschiedlichen Zusammenstellungen angeordnet werden. Mit besonderem Vorteil bilden die Steuerelektronik 29, der Dreiphasen-Umrichter 30, der elektrische Pumpenmotor 32, die Hydraulikpumpe 33 und die Hydraulikventilanordnung 28 ein Kompaktaggregat 35.

Die Erfindung ist nicht beschränkt auf Gegengewichtsgabelstapler. Vielmehr kann jegliche Art von Flurförderzeugen mit einem elektrischen Pumpenmotor gemäß der Erfindung ausgestattet werden. Es können etwa auch Lagertechnikgeräte mit elektrischem Antrieb mit einem solchen elektrischen Pumpenmotor versehen werden, wie beispielsweise Hubwagen, Kommissionierer, Schlepper, Plattformwagen, Schubstapler, Schubmaststapler und Regalstapler.

## Patentansprüche

1. Flurförderzeug mit einer Arbeitshydraulik, die durch eine Hydraulikpumpe (33) mit Druckmittel versorgt wird, wobei die Hydraulikpumpe (33) von einem elektrischen Pumpenmotor (32) angetrieben wird,
**dadurch gekennzeichnet,**
**dass** der elektrische Pumpenmotor (32) einen Stator mit mindestens drei Phasenwicklungen zur Erzeugung eines Drehfeldes und einen Rotor (1) mit weichmagnetischem Material hoher Permeabilität aufweist, wobei der Rotor (1) Pole (5) mit in Orientierung der Pole (5) geringer magnetischer Reluktanz aufweist, wobei der elektrische Pumpenmotor (32) als synchrone Reluktanzmaschine ausgeführt ist, und wobei der Rotor (1) axial laminierte Bleche (4) aufweist, deren offene, radiale Schnittkanten die Pole (5) bilden.

2. Flurförderzeug nach Anspruch 1,
**dadurch gekennzeichnet,**
**dass** zur Erzeugung des Drehfeldes des Stators ein Umrichter (30) vorgesehen ist, der die Phasenwicklungen sinusförmig erregt.

3. Flurförderzeug nach Anspruch 1 oder 2,
**dadurch gekennzeichnet,**
**dass** der Rotor (1) vier radial nach außen gerichtete Pole (5) aufweist.

4. Flurförderzeug nach einem der Ansprüche 1 bis 3,
**dadurch gekennzeichnet,**
**dass** die vier Pole (5) in zwei sich unter 90° schneidenden Achsen angeordnet sind.

5. Flurförderzeug nach einem der Ansprüche 1 bis 4,
**dadurch gekennzeichnet,**
**dass** der Rotor (1) Segmente (3) an seinem Umfang aufweist, die in Umfangsrichtung jeweils mit einem Luftspalt zueinander beanstandet sind.

6. Flurförderzeug nach einem der Ansprüche 1 bis 5,
**dadurch gekennzeichnet,**
**dass** der Rotor (1) Flusssperren-Schnitte (6) aufweist.

7. Flurförderzeug nach einem der Ansprüche 1 bis 6,
**dadurch gekennzeichnet,**
**dass** der Rotor (1) zusätzliche Eisenstäbe und/oder Aluminiumstäbe aufweist.

8. Flurförderzeug nach einem der Ansprüche 1 bis 7,
**dadurch gekennzeichnet,**
**dass** der Rotor (1) zusätzliche Wicklungen aus Eisen- und/oder Aluminiumdraht aufweist.

9. Flurförderzeug nach einem der Ansprüche 1 bis 8,
**dadurch gekennzeichnet,**
**dass** der Rotor (1) zusätzliche Permanentmagnete aufweist.

10. Flurförderzeug nach einem der Ansprüche 1 bis 9,
**dadurch gekennzeichnet,**
**dass** der Rotor (1) des Pumpenmotors (32) zugleich ein Förderrad der Hydraulikumpe (33) ist.

11. Flurförderzeug nach einem der Ansprüche 1 bis 10,
**dadurch gekennzeichnet,**
**dass** die Arbeitshydraulik eine Hubvorrichtung (14) für Lasten, insbesondere ein Hubgerüst (25) mit höhenbeweglich geführtem Lastaufnahmemittel (15), und/oder eine hydraulische Lenkung umfasst.

## Claims

1. Industrial truck with a working hydraulics system which is supplied with pressure medium by way of a hydraulic pump (33), wherein the hydraulic pump (33) is driven by an electric pump motor (32), **characterized in that** the electric pump motor (32) has a stator with at least three phase windings for generating a rotary field and a rotor (1) consisting of a magnetically soft material of high permeability, wherein the rotor (1) has poles (5) with a low magnetic reluctance in the orientation of the poles (5), wherein the electric pump motor (32) is configured as a synchronous reluctance machine, and wherein the rotor (1) has axial laminations (4), the open radial cut edges of which form the poles (5) .

2. Industrial truck according to Claim 1, **characterized in that** an inverter (30) is provided for generating the rotary field of the stator, which inverter (30) excites the phase windings sinusoidally.

3. Industrial truck according to Claim 1 or 2, **characterized in that** the rotor (1) has four radially outwardly directed poles (5).

4. Industrial truck according to one of Claims 1 to 3, **characterized in that** the four poles (5) are arranged in two axes which intersect at 90°.

5. Industrial truck according to one of Claims 1 to 4, **characterized in that**, on its circumference, the rotor (1) has segments (3) which are spaced apart from one another in the circumferential direction in each case by way of an air gap.

6. Industrial truck according to one of Claims 1 to 5, **characterized in that** the rotor (1) has flux barrier cuts (6) .

7. Industrial truck according to one of Claims 1 to 6, **characterized in that** the rotor (1) has additional iron rods and/or aluminium rods.

8. Industrial truck according to one of Claims 1 to 7, **characterized in that** the rotor (1) has additional windings consisting of iron and/or aluminium wire.

9. Industrial truck according to one of Claims 1 to 8, **characterized in that** the rotor (1) has additional permanent magnets.

10. Industrial truck according to one of Claims 1 to 9, **characterized in that** the rotor (1) of the pump motor (32) is at the same time an impeller wheel of the hydraulic pump (33).

11. Industrial truck according to one of Claims 1 to 10, **characterized in that** the working hydraulics system comprises a lifting apparatus (14) for loads, in particular a lifting frame (25) with a load suspension means (15) which is guided in a vertically movable manner, and/or comprises a hydraulic steering system.

## Revendications

1. Chariot de manutention doté d'un système hydraulique de travail qui est alimenté en fluide sous pression par une pompe hydraulique (33), la pompe hydraulique (33) étant entraînée par un moteur de pompe électrique (32),
**caractérisé en ce que** le moteur de pompe électrique (32) présente un stator doté d'au moins trois enroulements de phase destinés à générer un champ magnétique rotatif et un rotor (1) en matériau magnétique doux à haute perméabilité, le rotor (1) présentant des pôles (5) ayant une faible reluctance magnétique dans l'orientation des pôles (5), le moteur de pompe électrique (32) étant réalisé sous la forme d'une machine à reluctance synchrone, et le rotor (1) présentant des tôles (4) laminées axialement dont les arêtes radiales ouvertes constituent les pôles (5).

2. Chariot de manutention selon la revendication 1, **caractérisé en ce que** pour la génération du champ magnétique rotatif du stator, un convertisseur (30) est prévu qui excite de manière sinusoïdale les enroulements de phase.

3. Chariot de manutention selon la revendication 1 ou 2, **caractérisé en ce que** le rotor (1) présente quatre pôles (5) orientés radialement vers l'extérieur.

4. Chariot de manutention selon la revendication 1 à 3, **caractérisé en ce que** les quatre pôles (5) sont disposés sur deux axes qui se croisent à 90°.

5. Chariot de manutention selon la revendication 1 à 4, **caractérisé en ce que** le rotor (1) présente des segments (3) sur sa circonférence qui sont espacés les uns par rapport aux autres dans la direction circonférentielle avec un entrefer respectivement.

6. Chariot de manutention selon la revendication 1 à 5, **caractérisé en ce que** le rotor (1) présente des découpes de blocage de flux (6).

7. Chariot de manutention selon la revendication 1 à 6, **caractérisé en ce que** le rotor (1) présente des tiges de fer et/ou des tiges d'aluminium supplémentaires.

8. Chariot de manutention selon la revendication 1 à 7, **caractérisé en ce que** le rotor (1) présente des enroulements supplémentaires en fil de fer et/ou d'aluminium.

9. Chariot de manutention selon la revendication 1 à 8, **caractérisé en ce que** le rotor (1) présente des aimants permanents supplémentaires.

10. Chariot de manutention selon la revendication 1 à 9, **caractérisé en ce que** le rotor (1) du moteur de pompe (32) est en même temps une roue de refoulement de la pompe hydraulique (33).

11. Chariot de manutention selon la revendication 1 à 10, **caractérisé en ce que** le système hydraulique de travail comprend un dispositif de levage (14) pour des charges, en particulier un mât de levage (25) doté d'un moyen de support de charge (15) guidé de manière mobile en hauteur, et/ou une direction hydraulique.
